# EUROPÄISCHE PATENTSCHRIFT

(11) **EP 1 393 126 B1**
(45) Veröffentlichungstag und Bekanntmachung des Hinweises auf die Patenterteilung: **14.12.2005**
(21) Anmeldenummer: 02732667.7
(22) Anmeldetag: 25.04.2002
(51) Int. Cl.: G03B 17/14, G02B 7/14

(54) **RASTMECHANISMUS**
CATCHING MECHANISM
MECANISME D'ENCLIQUETAGE

(30) Priorität: 27.04.2001 DE 10121439
(43) Veröffentlichungstag der Anmeldung: 03.03.2004
(73) Patentinhaber: Hensoldt AG, 35576 Wetzlar (DE)
(72) Erfinder: LUTHARDT, Dirk, 35581 Wetzlar (DE); JAVORSKY, Myron, 751 24 Prerov (CZ); MILAN, Olsa, 75115 Domazelice 96 (CZ)
(74) Vertreter: Gnatzig, Klaus
(86) Internationale Anmeldenummer: PCT/EP2002/004569
(87) Internationale Veröffentlichungsnummer: WO 2002/088840

(56) Entgegenhaltungen:
- US-A- 3 620 149
- US-A- 4 372 650
- US-A- 4 600 277
- US-A- 5 464 300

## Beschreibung

Die Erfindung betrifft einen Rastmechanismus gemäß dem Oberbegriff des Patentanspruches 1.

Aus der US 4,600,277 ist ein Teleskop mit einem Hauptgehäuse und mit zumindestens zwei austauschbaren Einblicksystemen bekannt Die beiden Einblicksysteme unterscheiden sich maßgeblich dadurch, daß ein erstes Einblicksystem eine zur optischen Achse des Teleskopes koaxiale Anordnung bzw. Ausrichtung aufweist. Ein zweites Einblicksystem weist eine winkelige Gestaltungsform auf und erlaubt einen Einblick in das Teleskop unter einem 45 ° Winkel zur optischen Achse, die durch die im Hauptgehäuse gelagerten Linsen festgelegt ist Die Einblickanordnungen sind mit dem Hauptgehäuse bzw. mit Teleskop mittels eines Bajonettverschlusses verbindbar. Der Bajonettverschluß umfaßt an dem Einblicksystem L-förmige Vorsprünge. Diese Vorsprünge sind mit dem Gehäuse des jeweiligen Einblicksystems fest verbunden und weisen eine axiale Ausrichtung in bezug auf die optische Achse auf. Diesen Vorsprüngen sind Ausnehmungen zugeordnet, die in einer mit dem Hauptgehäuse fest verbundenen Platte, die senkrecht zur optischen Achse des Teleskopes angeordnet ist, ausgebildet. Im vergleich zueinander weisen die Vorsprünge und die Ausnehmungen unterschiedliche Erstreckungen in Umfangsrichtung auf, so daß bei Verbindung von Einblicksystem und Hauptgehäuse das Einblicksystem zum Hauptgehäuse nur eine vorbestimmte und damit definierte Position einnehmen kann.

Zur Verbindung von Hauptgehäuse und Einblicksystem werden die Vorsprünge in axialer Richtung durch die in der Platte ausgebildeten Ausnehmungen geführt. Durch eine anschließende Drehbewegung klemmen die L-förmigen Vorsprünge hinter dieser Platte. Zur Fixierung ist ein Pin vorgesehen, der in eine in dem Einblicksystem ausgebildete Ausnehmung einrastet Zum Lösen des Einblicksystems muß dieser Pin, der mittels einer Feder vorgespannt ist, durch den Benutzer zurückgezogen werden. Dafür ist ein Bedienelement vorgesehen, daß von dem Benutzer zu diesem Zweck zu betätigen ist.

Aus der US 2,260,991 ist ein Rastmechanismus zur Bereitstellung einer lösbaren Verbindung von einem Objektiv mit einem Kameragehäuse bekannt. Auch bei dieser Rastverbindung ist eine mit dem Kameragehäuse fest verbundene Platte vorgesehen. In dieser Platte sind Ausnehmungen mit unterschiedlichen Erstreckungen in Umfangsrichtung vorgesehen. Mit diesen Ausnehmungen wirken bei Herstellung einer festen Verbindung an dem Objektivgehäuse ausgebildete, in radialer Richtung weisende Vorsprünge zusammen. Zur Herstellung der festen Verbindung passieren die Vorsprünge durch die Ausnehmungen die mit der Kamera verbundene Platte. Durch Drehung des Objektives klemmen die Vorsprünge des Objektivs hinter der Platte.

Nachteilig ist bei diesen Systemen, daß die an einem Bauteil ausgebildeten Vorsprünge beim Einrasten in dem anderen Bauteil, wie Hauptgehäuse oder Kameragehäuse, stark belastet werden. Durch diese starke Belastung kommt es durch häufiges Verbinden und Lösen zur Beschädigung der Vorsprünge.

Aufgabe der Erfindung ist es eine lösbare Verbindung derart weiter zu entwickeln, daß die Belastung an den zur Herstellung der Verbindung vorgesehenen Vorsprünge vermindert ist

Die Aufgabe der Erfindung wird durch die im Patentanspruch 1 gegebenen Merkmale gelöst. Durch die Maßnahme, einen Rastmechanismus mit einem drehbar gelagerten Ringelement zu versehen, das Ausnehmungen zur Aufnahme der Vorsprünge aufweist, wobei die lösbare Verbindung mittels des Ringelementes bereitgestellt wird, konnte die auf die Vorsprünge wirkende Belastung reduziert werden, da die Vorsprünge bei Ausfubrung der Drehbewegung von den Ausnehmungen aufgenommen sind. Vorzugsweise können die Vorsprünge kräftefrei bzw. nahezu kräftefrei in die in dem Ringelement ausgebildeten Ausnehmungen eingeführt werden. Bei Ausführung der Drehbewegung zur Herstellung der festen Verbindung des Ringelementes mit dem anderen Gehäuseteil wird die Verbindung über das Ringelement hergestellt und somit die an den Vorsprüngen anfallende Belastung stark reduziert.

Es hat sich als vorteilhaft herausgestellt, dem Ringelement mindestens ein Federelement zuzuordnen, mit dem es zusammen wirkt, wobei bei der Herstellung der festen Verbindung der Gehäuseteile Spannenergie dieses Federlementes frei wird.

Es hat sich als vorteilhaft herausgestellt, den bzw. die vorgesehenen Rastvorsprünge mit den zugeordneten Rastausnehmungen senkrecht zu den Vorsprüngen anzuordnen.

Es hat sich als vorteilhaft herausgestellt, daß bei Entspannung des Federelementes mindestens ein vorgesehener Rastvorsprung in eine zugeordnete Rastnut einrastet. Dadurch wird das Ringelement bezüglich Drehung fixiert. Mit Einrasten der Rastvorsprünge in den Rastnuten wird eine formschlüssige Verbindung hergestellt. Diese Rastvorsprünge und Rastnuten können mit radialer Ausrichtung als auch mit axialer Ausrichtung angeordnet sein.

Bei radialer Ausrichtung hat es sich als vorteilhaft herausgestellt, jeweils zwei Federelmente diametral gegenüberliegend anzuordnen, so daß die koaxiale Lage des Ringelementes bezüglich der optischen Achse erhalten bleibt Damit kann eine koaxiale Anordnung des mit dem Ringelement über die Vorsprünge verbundenen Gehäuseteils einfach bereitgestellt werden. Es muß keine Dezentrierung der Gehäuseteile bei lösen der Gehäuseteile in Kauf genommen werden. Dies wirkt sich vorteilhaft bei Überprüfung von Toleranzen der Bauteile aus. Insbesondere kann leicht überprüft werden, ob die Vorsprünge eine symmetrische Anordnung zu einer optischen Achse aufweisen.

Es hat sich als vorteilhaft herausgestellt, daß das Ringelement bei Entspannung des oder der Federelemente eine Bewegung in axialer Richtung ausführt, wobei die axiale Richtung durch die optische Achse festgelegt wird. Bei solch einer Anordnung kann auch vorgesehen sein, daß das Ringelement eine Kippbewegung zur Herstellung einer Verrastung ausführt. Dies kann insbesondere dann auftreten, wenn nur ein Federelement vorgesehen ist

Es hat sich als vorteilhaft herausgestellt mehrere in axialer parallel wirkende - Federelemente vorzusehen. Durch Vorsehen von zwei oder mehr Federelementen kann besonders leicht eine parallele Bewegung des Ringelementes zur optischen Achse bei Verrastung oder Lösen der Verrastung bereitgestellt werden.

Es hat sich als vorteilhaft herausgestellt, daß das Ringelement des Rastmechanismusses sowohl bei Lösen als auch beim Herstellen der Verbindung niemals die achstreue Anordnung bezüglich der optischen Achse aufgibt

Es hat sich als vorteilhaft herausgestellt, daß durch das Federelement gleichzeitig der Rastvorsprung gebildet wird. Bei Verrastung des Federelementes wird Spannenergie frei, indem das Federelement in die Rastnut einrastet. Dies trägt zu einer besonders einfachen Konstruktion eines Rastmechanismusses bei.

Es hat sich als vorteilhaft herausgestellt als Federelemente Blattfedern vorzusehen, die preiswert erhältlich sind und zuverlässig arbeiten.

Es hat sich als vorteilhaft herausgestellt, das Federelement derart auszulegen, daß das Moment, das zum Herstellen der lösbaren Verbindung erfoderlich ist größer ist, als das Moment, das zum, Herstellen der Verbindung aufgebracht werden muß. Damit wird einem versehentlichen Lösen entgegen gewirkt.

Es hat sich als vorteilhaft herausgestellt Hauptfedern vorzusehen, durch die ein axiales Spiel der Gehäuseteile gegeneinander bei hergestellter fester Verbindung kompensiert wird. Sind insbesonder optische Elemente in den Gehäuseteilen angeordnet, so kann aus einem axialen Spiel resultieren, daß einem Benutzer ein unscharfes Bild dargeboten wird.

Dieser Rastmechanismus hat sich insbesondere zum Verbinden von optischen Komponenten, insbesondere einem Okular und einem optischen Gerät als besonders geeignet herausgestellt.

Insbesondere für Teleskope mit auswechselbaren Okularen ist diese Rastmechanismus besonders geeignet, mittels dessen ein Wechseln der Okulare leicht durchführbar ist und der zuverlässig arbeitet. Es ist insbesondere nicht erforderlich einen gesonderten Hebel beim Lösen des Rastmechanismusses zu betätigen, was sich negativ auf das Händling beim Wechseln der Okulare auswirken würde. Bei diesem Rastmechanismus kann alleine durch Bewegen der Gehäuseteile gegeneinander die Verbindung der Gehäuseteile, insbesondere Okular und Hauptgehäuse, gelöst werden.

Weitere vorteilhafte Maßnahmen sind in weiteren Unteransprüchen beschrieben. Anhand des folgenden Ausführungsbeispiels wird die Erfindung näher beschrieben.

Es zeigt :
- Figur 1:: Teleskop;
- Figur 2:: Rastmechanismus; und

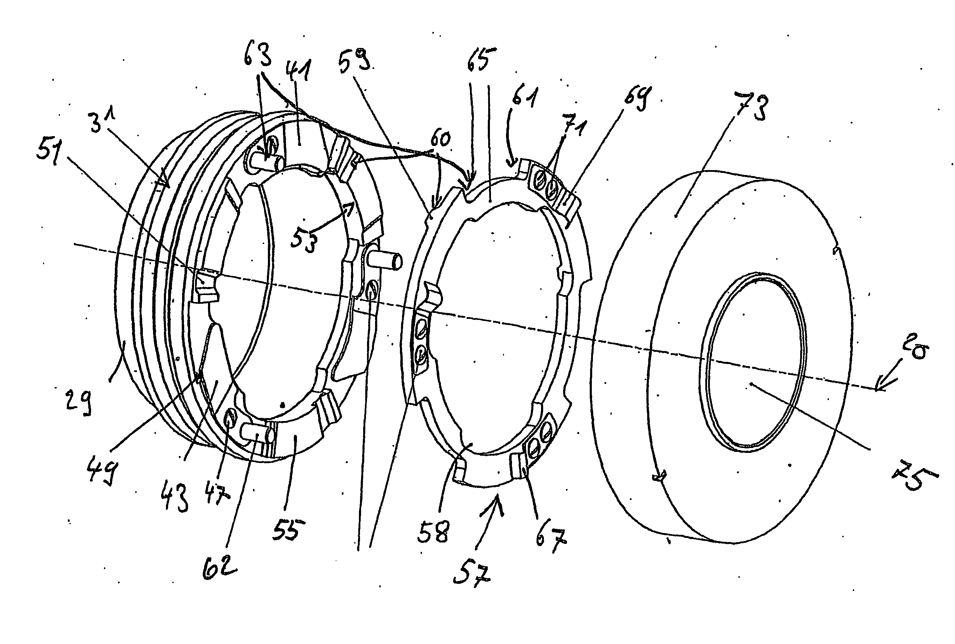

- Figur 3:: Vergrößerte Darstellung der Aufnahme des Rastmechanismuses
- Figur 4:: Darstellung vom im Ringelement aufgenommenen Vorsprüngen.

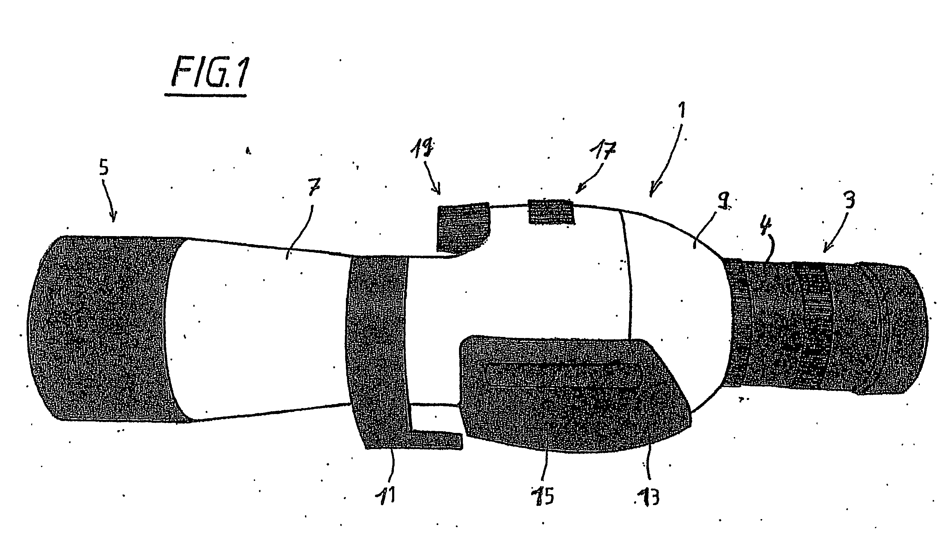

In Figur 1 ist ein Teleskop mit axialem Einblick dargestellt, anhand dessen die Erfindung näher erläutert wird.

Das Teleskop 1 umfaßt ein Objektiv 5, ein Okular 3 und zwei Gehäuseteile 7, 9. Bei dieser Ausführung ist das Objektiv 5 mit dem Gehäuseteil 7 fest verbunden und das Okular 3 ist mit dem Gehäuseteil 9 lösbar verbunden. Die Gehäuseteile 7 und 9 sind ihrerseits miteinander fest verbunden. Weiterhin weist das Teleskop 1 einen Griffbereich 13 auf, in dem Griffmulden 15 an beiden Längsseiten ausgebildet sind. Zur Verbindung mit einem Stativ ist eine Stativbefestigung 11 vorgesehen. Das Teleskop ist mittels eines Feintriebes 19 und ein Grobtriebes 17 fokussierbar.

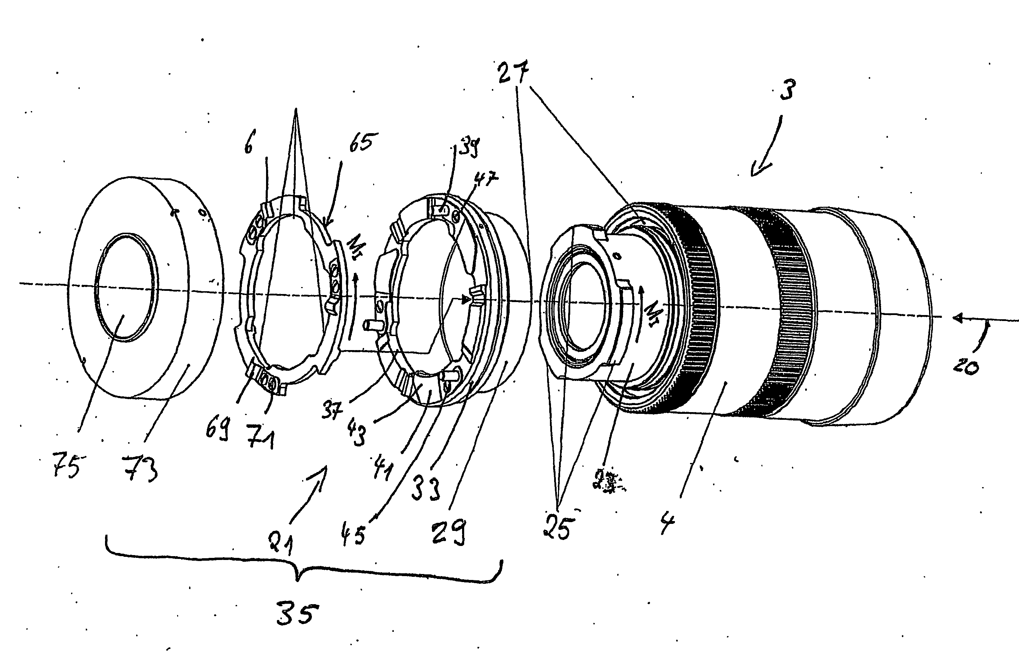

Anhand von Figur 2 wird die lösbare Verbindung zwischen Gehäuseteil 9 und dem Okular 3 bzw. einem Gehäuse 4 des Okulars, näher beschrieben. Das Gehäuse 4 des Okulars 3 ist koaxial zu einer optischen Achse angeordnet, die durch die im Okular 3 angeordneten optischen Linsen, nicht dargestellt, festgelegt ist. Auf der mit dem Gehäuseteil 9 zu verbindenden Seite weist das Okular 3 einen Fortsatz 23 auf. Endseitig ist der Fortsatz mit Vorsprüngen 25 versehen. Diese Vorsprünge 25 weisen unterschiedliche Formgestaltung, hier unterschiedliche Erstreckung in Umfangsrichtung auf. Es könnte jedoch ebenso eine unterschiedliche Erstreckung der Vorsprünge in radialer Richtung bzw. lediglich eine unterschiedliche Form der Vorsprünge, wie Rautenform, Ringsegment usw. vorgesehen sein. In dem Gehäuseteil 9 des Teleskopes 1 ist eine Aufnahme 35 angeordnet. Diese Aufnahme umfaßt einen Deckel 73, ein Ringelement 57 und eine Muffe 29.Der Deckel 73 ist mit einer Abschlußplatte 75versehen, die Durchsichtig ist und durch die ein inneres Volumen des Teleskopes 1 zur Umgebung hin abgedichtet wird. Insbesondere kann durch den Deckel 73 mit Abschlußplatte 75 gewährleistet werden, daß keine Feuchtigkeit in das durch die Gehäuseteilen 7, 9 und dem Objektiv gebildete Volumen eindringt. Auch ist dieses innere Volumen damit vor Schmutzpartikeln, insbesondere Staub, geschützt.

In dem Deckel 73 ist das Ringelement 57 drehbar gelagert.

Für die drehbare Lagerung sind am radialen Außenumfang des Ringelement 57 Führungsschlitze 65 ausgebildet, die mit zur optischen Achse 20 des Telekopes 1 koaxial angeordneten Stäbe 62 zusammenwirken. Die Stäbe 62 sind ortsfest, in dem dargestellten Ausführungsbeispiel durch feste Verbindung mit der Muffe 29, angeordnet.

Durch Zusammenwirken der Stäbe 62 mit den Führungsschlitzen 65 wird eine Drehbegrenzung 63 für das des Ringelementes 57 bereitgestellt.

Diese Muffe 29 ist fest mit dem Deckel 73 verbunden, wobei das zwischen den letztgenannten angeordnete Ringelement 57 zwischen der Muffe 29 und dem Deckel 73 in begrenztem Maße in axialer Richtung bewegt werden kann.

Auf der dem Deckel 73 zugewandten Seite ist das Ringelement 57 mit Blattfedern 69 versehen, die durch Schrauben 71 fest mit dem Ringelement verbunden sind. Die Federkraft der Blattfedern 69 wirkt in axialer Richtung. In zusammengesetztem Zustand stützen sich die Blattfedern 69 gegen den Deckel 73 ab. Auf der gegenüberliegenden Seite ist das Ringelement 57 mit Rastvorsprüngen 59, die mit Ausrichtung in axialer Richtung angeordnet sind, versehen: Mindestens ein Rastvorsprung 59 weist eine in Umfangsrichtung ausgerichtete Rampe 60 auf. Sind die Rastvorsprünge 59 von den Rastnuten 51 aufgenommen, so wird mittels der Rampe 60 erreicht, daß bei Drehung des Ringelementes 57 durch die mit den Rastnuten 51 zusammen wirkenden Rampe 60 das Ringelement gleichzeitig eine Bewegung in axialer Richtung ausführt. Die Rampe 60 kann auch an den Rastnuten 51 ausgebildet sein. Beim Heraustreten der Rastvorsprünge 59 aus den Rastnuten 51 wird gleichzeitig die Federelemente 67 bzw. Blattfedern 69 vorgespannt. Zur Verminderung der dabei auftretenden Flächenpressung von Rastnut 51 und Rastvorsprung 59 pro Flächensegment sind vorzugsweise beide jeweils mit einer Rampe 60 ausgebildet, die an den beim Lösen der Verbindung zusammenwirkenden Flächen vorgesehen sind. Sind die Federelemente 67 vorgespannt, so stehen die Rastvorsprünge 59 mit an der Muffe 29 ausgebildeten Kontaktbereichen 55 in Verbindung bzw. stützen sich an diesen ab. Diese Kontaktbereiche 55 werden durch Axialvorsprünge 53 gebildet, die einstückig mit der Muffe 29 ausgebildet sind. Diese Kontaktbereiche sind in Umfangsrichtung angrenzend an die Rastnuten 51 angeordnet.

Fungieren die Blattfedern 69 gleichzeitig auch Rastvorsprünge (nicht dargestellt), so könnten die vorgesehenen Blattfedern anstelle der Rastvorsprünge angeordnet werden, wobei das Ringelement auf der gegenüberliegenden Seite mit dem Deckel gleitend in Kontakt stehen würde. Selbstverständlich könnten Rastvorsprünge und Rastnuten auch deckelseitig angeordnet sein, wobei dann das Ringelement gleitend mit der Muffe in Verbindung stehen würde.

Durch die Federelemente, die bei gelöstem Rastmechanismus vorgespannt sind, wird durch die auftretende Kontaktreibung, die bei Drehung des Ringelementes 57 auftritt, gewährleistet, daß sich das Ringelement ungewollt verdreht Dies ist insbesondere beim Einsetzen der Vorsprünge 25 in die in dem Ringelement 57 ausgebildeten Ausnehmungen 58, vorteilhaft. Die Ausnehmungen 58 sind an der Innenseite des Ringelementes in tangentialer Ausrichtung angeordnet.

Die Muffe 29 ist auf der dem Ringelement 57 zugewandten Seite mit Hauptfedern 41 versehen. Die Federkraft der Hauptfedern wirkt in axialer Richtung. Als Hauptfedern 41 sind in diesem Ausführungsbeispiel Blattfedern 43, die durch Befestigungselemente 45, hier Schrauben 47, mit der Muffe 29 fest verbunden sind. Unter den Blattfedern sind Vertiefungen 49 zur Bereitstellung eines möglichen Federweges der Hauptfedern 41 ausgebildet Am Außenumfang ist die Muffe 29mit einem Radialprofil 31. Dieses Radialprofil 31 umfasst zwei ringförmige Vorsprünge. Dieses Profil dient zur Herstellung der festen Verbindung von Deckel 73 und Muffe 29.

Auf der dem Okular 3 zugewandten Seite der Muffe 29 ist ein Anschlußring 33 vorgesehen, durch den zusammen mit einer in dem Okular 3 ausgebildeten umlaufenden Nut ein Anschlag 27 gebildet wird.

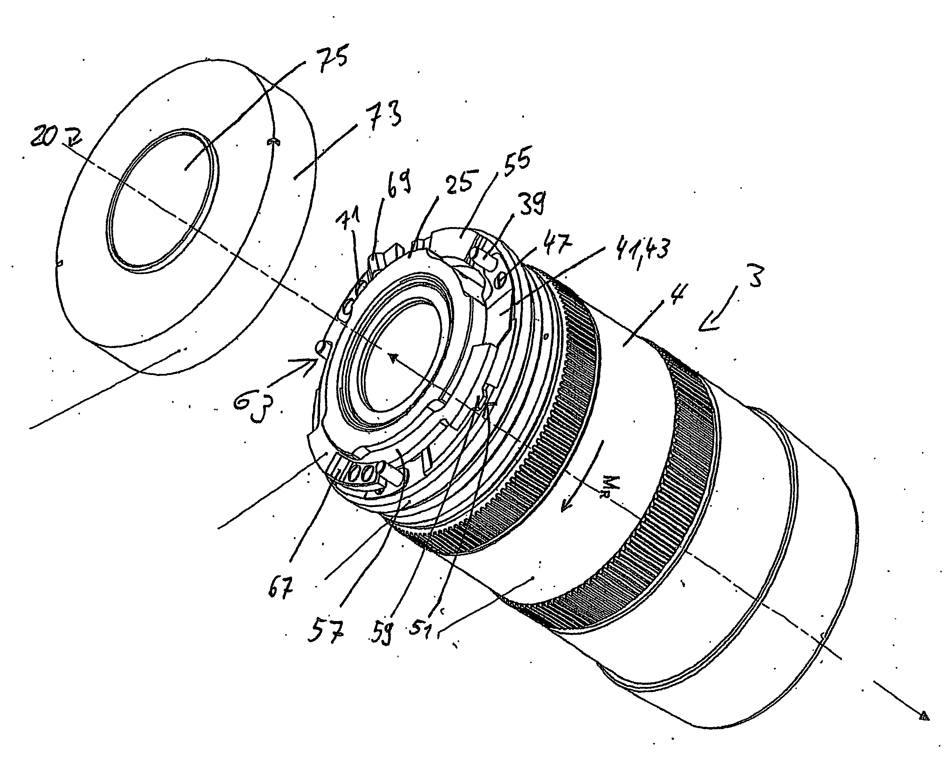

Das Okular 3 weist auf der, der Muffe 29 zugewandten Seite einen Fortsatz 23 auf, der koaxial zur optischen Achse20 ausgerichtet ist. Ist das Okular 3 mit dem Teleskop 1 fest verbunden, so ist die Muffe 29 sowie das Ringelement 57 koaxial zum Fortsatz 23 angeordnet Die Lagerung dieses Fortsatzes 23 innerhalb der Muffe 29 , wobei das Ringelement 57 auf dem Fortsatz drehbar gelagert ist, ist in Figur 4 dargestellt.
Die Vorsprünge 25 sind endseitig, auf der der Muffe 29 zugewandten Seite an dem Fortsatzes 23 ausgebildet.

Zur Verbindung des Okulars 3 mit dem Teleskop1 wird der Fortsatz 23 in die Muffe 29 eingeführt, wobei die Vorsprünge 25 von den Ausnehmungen 58 aufgenommen werden. Durch Verdrehen von dem Gehäuse 4 des Okulars 3 gegenüber dem Gehäuseteil 9 wird auch das Ringelement 57 gegenüber dem Deckel 73 und der Muffe 29 verdreht Mit Erreichen der vorgesehenen Rastposition greifen die Rastvorsprünge 59 in Rastnuten 51 ein. Dabei bewegt sich das Ringelemement 57, durch die Federelemente 67 veranlaßt, in axialer Richtung womit sich die Federelemente entspannen.

Bei Anordnung der Rastvorsprünge und der Rastnuten in radialer Richtung (nicht dargestellt) ist das Federelement derart anzuordnen, daß die Federkraft der Federelemente auch in radialer Richtung wirkt, so daß bei Verrastung die Spannenergie der Federelemente frei wird.

### Bezugszeichenliste

- 1: Teleskop
- 3: Okular
- 4: Gehäuse
- 5: Objektiv
- 7: Gehäuseteil
- 9: Gehäuseteil
- 11: Stativ
- 13: Griffbereich
- 15: Griffmulden
- 17: Grobtrieb
- 19: Feintrieb
- 20: optische Achse
- 21: Rastmechanismus
- 23: Fortsatz
- 25: Vorsprünge
- 27: Anschlag
- 29: Muffe
- 31: Radialprofil
- 33: Anschlußring
- 35: Aufnahme
- 37: Ausnehmung
- 39: Anschlag
- 41: Hauptfedern
- 43: Blattfedern
- 45: Befestigungselemement
- 47: Schrauben
- 49: Vertiefungen
- 51: Rastnuten
- 53: Axialvorsprung
- 55: Kontaktbereich
- 57: Ringelement
- 58: Ausnehmung
- 59: Rastvorsprünge
- 60: Rampe
- 61: Tangentialausnehmung
- 62: Stäbe
- 63: Drehbegrenzung
- 65: Führungsschlitz
- 67: Federelement
- 69: Blattfeder
- 71: Schrauben
- 73: Deckel
- 75: Abschlußplatte

## Patentansprüche

1. Rastmechanismus zum Herstellen einer lösbaren Verbindung eines Gehäuseteils mit einem weiteren Gehäuseteil, wobei an einem der Gehäuseteile Vorsprünge (25) vorgesehen sind und wobei bei der Herstellung der lösbaren Verbindung mittels einer Drehbewegung der Gehäuseteile gegeneinander Rastvorsprünge (59) in zugeordnete Rastausnehmungen (51) verrastend eingreifen, **dadurch gekennzeichnet, daß** der Rastmechanismus (21) ein drehbar gelagertes Ringelement (57) umfaßt, das zwischen einem Deckel (73) und einer Muffe (29) angeordnet ist, wobei Deckel (73) und Muffe (29) ortsfest zu einem der Gehäuseteile (9) angeordnet sind und das Ausnehmungen (58) zur Aufnahme der Vorsprünge (25) umfaßt und das mittels Rastausnehmungen (51) und Rastvorsprüngen (59) bezüglich Drehung fixierbar ist.

2. Rastmechanismus nach Anspruch 1, **dadurch gekennzeichnet, daß** mit dem Ringelement (51) mindestens ein Federelement (67) zusammen wirkt, wobei bei Herstellung der lösbaren Verbindung der Gehäuseteile (4, 9) Spannenergie des mindestens einen Federelementes (67) frei wird.

3. Rastmechanismus nach Anspruch 1, **dadurch gekennzeichnet, daß** der vorgesehene Rastvorsprung (59) und die zugeordnete Rastausnehmung (51) mit senkrechter Ausrichtung in bezug auf die Ausrichtung der Vorsprünge (25) angeordnet sind.

4. Rastmechanismus nach Anspruch 2 oder Anspruch 3, **dadurch gekennzeichnet, daß** bei Entspannung des Federelementes (67) das Ringelement (57) eine Bewegung in axialer Richtung entlang einer Drehachse (20) des Ringelements (57) ausführt.

5. Rastmechanismus nach Anspruch 2 oder Anspruch 3, **dadurch gekennzeichnet, daß** durch das Federelement (67) ein Rastvorsprung (59) gebildet wird.

6. Rastmechanismus nach mindestens einem der Ansprüche 1 - 3, **dadurch gekennzeichnet, daß** die Federkraft des einen Federelementes in radialer Richtung wirkt und die Rastnut oder der Rastvorsprung am Umfang des Ringelementes (57) mit radialer Ausrichtung angeordnet ist.

7. Rastmechanismus nach mindestens einem der vorangegangenen Ansprüche, **dadurch gekennzeichnet, daß** mehrere in paralleler Richtung wirkende Federelemente (67) vorgesehen sind.

8. Rastmechanismus nach mindestens einem der vorangegangenen Ansprüche, **dadurch gekennzeichnet, daß** mehrere Rastvorsprünge (59) mit zugeordneten Rastnuten (51) vorgesehen sind.

9. Rastmechanismus nach einem der Ansprüche 1 bis 8, **dadurch gekennzeichnet, daß** jeweils zwei Federelemente diametral gegenüberliegend angeordnet sind, so daß bei Verrastung das Ringelement (57) die koaxiale Anordnung zur optischen Achse (20) beibehält.

10. Rastmechanismus nach mindestens einem der vorangegangenen Ansprüche, **dadurch gekennzeichnet, daß** zur Kompensation eines axialen Spiels der Gehäuseteile (4, 9) gegeneinander Hauptfedern (41) vorgesehen sind.

11. Rastmechanismus nach Anspruch 10, **dadurch gekennzeichnet, daß** die Hauptfedern (41) nur bei verbundenen Gehäuseteilen (4, 9) unter Spannung stehen.

12. Rastmechanismus nach mindestens einem der vorangegangenen Ansprüche, **dadurch gekennzeichnet, daß** die Hauptfedern (41) zum Ausgleichen des axialen Spiels mit den Vorsprüngen (25) in Wirkverbindung treten.

13. Rastmechanismus nach Anspruch 12, **dadurch gekennzeichnet, daß** das Ringelement (57) durch Anschläge um ein vorbestimmtes Winkelmaß drehbar ist.

14. Rastmechanismus nach Anspruch 2 oder Anspruch 12, **dadurch gekennzeichnet, daß** die Rastnut (51) oder der Rastvorsprung (59) in Drehrichtung des Ringelementes (57) zum Lösen der Rastverbindung eine Rampe (60) aufweist.

15. Rastmechanismus nach Anspruch 14, **dadurch gekennzeichnet, daß** die Steigung der Rampe derart gewählt ist, daß das zum Lösen der Verbindung erforderliche Moment größer ist, als das Moment was zum Herstellen der Verbindung der beiden Gehäuseteile (4, 9) erforderlich ist.

16. Okular, für ein optisches Gerät, insbesondere Fernrohr, **dadurch gekennzeichnet, daß** das Okular ein Gehäuseteil (4) umfaßt, das mittels eines Rastmechanismuses nach mindestens einem der Ansprüche 1 bis 15 mit dem optischen Gerät (1) verbindbar ist.

17. Teleskop mit einem auswechselbaren Okular, **dadurch gekennzeichnet, daß** zur Herstellung einer lösbaren Verbindung des Okulars (3) mit dem Teleskop (1) ein Rastmechanismus (21) nach einem der Ansprüche 1-15 vorgesehen ist.

## Claims

1. Latching mechanism for producing a releasable connection between a housing part and a further housing part, projections (25) being provided on one of the housing parts, and latching projections (59) engaging in a latching manner in associated latching cutouts (51) when the releasable connection is produced by means of a rotary movement of the housing parts in relation to one another, **characterized in that** the latching mechanism (21) comprises a ring element (57), which is mounted such that it can rotate, is arranged between a cover (73) and a coupling (29), the cover (73) and the coupling (29) being arranged such that they are fixed in position in relation to one of the housing parts (9), comprises cutouts (58) for the purpose of accommodating the projections (25) and can be fixed in terms of rotation by means of latching cutouts (51) and latching projections (59).

2. Latching mechanism according to Claim 1, **characterized in that** at least one spring element (67) interacts with the ring element (51), stressing energy of the at least one spring element (67) being released when the releasable connection of the housing parts (4, 9) is produced.

3. Latching mechanism according to Claim 1, **characterized in that** the latching projection (59) provided and the associated latching cutout (51) are arranged with a perpendicular alignment with respect to the alignment of the projections (25).

4. Latching mechanism according to Claim 2 or Claim 3, **characterized in that**, when the stress of the spring element (67) is released, the ring element (57) carries out a movement in the axial direction along an axis of rotation (20) of the ring element (57).

5. Latching mechanism according to Claim 2 or Claim 3, **characterized in that** a latching projection (59) is formed by the spring element (67).

6. Latching mechanism according to at least one of Claims 1-3, **characterized in that** the spring force of one spring element acts in the radial direction, and the latching groove or the latching projection is arranged with a radial alignment on the circumference of the ring element (57) .

7. Latching mechanism according to at least one of the preceding claims, **characterized in that** two or more spring elements (67) acting in a parallel direction are provided.

8. Latching mechanism according to at least one of the preceding claims, **characterized in that** two or more latching projections (59) having associated latching grooves (51) are provided.

9. Latching mechanism according to one of Claims 1 to 8, **characterized in that** in each case two spring elements are arranged diametrically opposite one another such that, during latching, the ring element (57) maintains the coaxial arrangement with respect to the optical axis (20).

10. Latching mechanism according to at least one of the preceding claims, **characterized in that** main springs (41) are provided for the purpose of compensating for axial play of the housing parts (4, 9) with respect to one another.

11. Latching mechanism according to Claim 10, **characterized in that** the main springs (41) are only stressed when the housing parts (4, 9) are connected.

12. Latching mechanism according to at least one of the preceding claims, **characterized in that** the main springs (41) for the purpose of compensating for the axial play enter into an operative connection with the projections (25).

13. Latching mechanism according to Claim 12, **characterized in that** the ring element (57) can be rotated through a predetermined angular extent through stops.

14. Latching mechanism according to Claim 2 or Claim 12, **characterized in that** the latching groove (51) or the latching projection (59) has a ramp (60) in the direction of rotation of the ring element (57) for the purpose of releasing the latching connection.

15. Latching mechanism according to Claim 14, **characterized in that** the gradient of the ramp is selected such that the torque required for releasing the connection is greater than the torque which is required for producing the connection between the two housing parts (4, 9).

16. Ocular, for an optical device, in particular a telescope, **characterized in that** the ocular comprises a housing part (4), which can be connected to the optical device (1) by means of a latching mechanism according to at least one of Claims 1 to 15.

17. Telescope having a replaceable ocular, **characterized in that** a latching mechanism (21) according to one of Claims 1-15 is provided for the purpose of producing a releasable connection between the ocular (3) and the telescope (1).

## Revendications

1. Mécanisme d'encliquetage pour créer une connexion desserrable d'une partie de boîtier comprenant une partie de boîtier supplémentaire, dans lequel on prévoit des saillies (25) sur l'une des parties de boîtier, et dans lequel, lors de la création de la connexion desserrable au moyen d'un mouvement de rotation des parties de boîtier l'une par rapport à l'autre, des saillies d'encliquetage (59) viennent en prise par encliquetage dans des évidements d'encliquetage associés (51), **caractérisé en ce que** le mécanisme d'encliquetage (21) comprend un élément annulaire monté à rotation (57), lequel est disposé entre un couvercle (73) et un manchon (29), le couvercle (73) et le manchon (29) étant disposés fixement par rapport à l'une des parties de boîtier (9) et lequel comprend des évidements (58) pour recevoir les saillies (25) et lequel peut être fixé en rotation au moyen d'évidements d'encliquetage (51) et de saillies d'encliquetage (59).

2. Mécanisme d'encliquetage selon la revendication 1, **caractérisé en ce qu'**au moins un élément de ressort (67) coopère avec l'élément annulaire (57), l'énergie de tension de l'au moins un élément de ressort (67) étant libérée lors de la création de la connexion desserrable des parties de boîtier (4, 9).

3. Mécanisme d'encliquetage selon la revendication 1, **caractérisé en ce que** la saillie d'encliquetage prévue (59) et l'évidement d'encliquetage associé (51) sont disposés avec une orientation perpendiculaire par rapport à l'orientation des saillies (25).

4. Mécanisme d'encliquetage selon la revendication 2 ou 3, **caractérisé en ce que** lors de la détente de l'élément de ressort (67), l'élément annulaire (57) exécute un déplacement dans la direction axiale le long d'un axe de rotation (20) de l'élément annulaire (57).

5. Mécanisme d'encliquetage selon la revendication 2 ou 3, **caractérisé en ce qu'**une saillie d'encliquetage (59) est formée par l'élément de ressort (67).

6. Mécanisme d'encliquetage selon au moins l'une quelconque des revendications 1 à 3, **caractérisé en ce que** la force de ressort d'un élément de ressort agit dans la direction radiale et la rainure d'encliquetage ou la saillie d'encliquetage est disposée sur la périphérie de l'élément annulaire (57) avec une orientation radiale.

7. Mécanisme d'encliquetage selon au moins l'une quelconque des revendications précédentes, **caractérisé en ce que** plusieurs éléments de ressort (67) agissant dans une direction parallèle sont prévus.

8. Mécanisme d'encliquetage selon au moins l'une quelconque des revendications précédentes, **caractérisé en ce que** plusieurs saillies d'encliquetage (59) avec des rainures d'encliquetage associées (51) sont prévues.

9. Mécanisme d'encliquetage selon l'une quelconque des revendications 1 à 8, **caractérisé en ce qu'**à chaque fois deux éléments de ressort sont disposés de manière diamétralement opposée, de sorte que lors de l'encliquetage, l'élément annulaire (57) maintienne l'agencement coaxial par rapport à l'axe optique (20).

10. Mécanisme d'encliquetage selon au moins l'une quelconque des revendications précédentes, **caractérisé en ce que** pour compenser un jeu axial des parties de boîtier (4, 9), on prévoit des ressorts principaux (41) opposés.

11. Mécanisme d'encliquetage selon la revendication 10, **caractérisé en ce que** les ressorts principaux (41) ne sont tendus que lorsque les parties de boîtier (4, 9) sont connectées.

12. Mécanisme d'encliquetage selon au moins l'une quelconque des revendications précédentes, **caractérisé en ce que** les ressorts principaux (41) entrent en liaison coopérante avec les saillies (25) pour compenser le jeu axial.

13. Mécanisme d'encliquetage selon la revendication 12, **caractérisé en ce que** l'élément annulaire (57) peut tourner d'une mesure angulaire prédéterminée par des butées.

14. Mécanisme d'encliquetage selon la revendication 2 ou 12, **caractérisé en ce que** la rainure d'encliquetage (51) ou la saillie d'encliquetage (59) présente, dans la direction de rotation de l'élément annulaire (57), une rampe (60) pour desserrer la connexion d'encliquetage.

15. Mécanisme d'encliquetage selon la revendication 14, **caractérisé en ce que** la pente de la rampe est choisie de telle sorte que le couple nécessaire pour desserrer la connexion soit supérieur au couple nécessaire pour créer la connexion des deux parties de boîtier (4, 9).

16. Oculaire, pour un appareil optique, en particulier un télescope, **caractérisé en ce que** l'oculaire comprend une partie de boîtier (4) qui peut être connectée au moyen d'un mécanisme d'encliquetage selon au moins l'une quelconque des revendications 1 à 15, à l'appareil optique (1).

17. Télescope comprenant un oculaire remplaçable, **caractérisé en ce que** pour la création d'une connexion desserrable de l'oculaire (3) avec le télescope (1), on prévoit un mécanisme d'encliquetage selon l'une quelconque des revendications 1 à 15.
